# EUROPEAN PATENT APPLICATION

(11) **EP 2 078 509 A1**
(43) Date of publication of application: **15.07.2009**
(21) Application number: 07815775.7
(22) Date of filing: 01.10.2007
(51) Int. Cl.: A61C 8/00

(54) **DENTAL IMPLANT**

(30) Priority: 30.10.2006 BY 20061063
(71) Applicant: Joint Stock Company "altimed", Minsk 220038 (BY)
(72) Inventor: DOSTA, Anatoli Dmitrievich, Minsk, 220034 (BY); ARTYUSHKEVICH, Aliaksandr Sergeevich, Minsk, 220113 (BY); ROZANOV, Yury Aleksandrovich, Minsk, 220007 (BY)
(74) Representative: Hatzmann, Martin
(86) International application number: PCT/BY2007/000004
(87) International publication number: WO 2008/052300

(57) **Abstract**

The invention relates to a cylinder-shaped dental implant with a titanium-made base (1) comprising a cavity for a porous structure and a canal for administering medications, wherein said implant base is made in the form of an outer thread-shaped helix which is fixed on three longitudinal stiffening ribs (2) positioned inside said helix and a porous structure (3) having a pore size ranging from 150 to 300 µm positioned inside said helix.

## Description

The invention is related to prosthetic dentistry and, in particular, to a group of dental implants intended for a two-stage implantation into alveolus.

Known is an implant (WO 9721393 A1) having an osseo-contacting surface with a biocompatible porous metal area for an in-growth of osseous tissue. However, the efficiency of said osseo-fusion is facilitated exclusively by micro-structural properties of a metal surface area since an implant structure presents a cylinder having no special macrogeometry features that would promote an in-growth of said osseous tissue into said implant. The above-described implant can be considered as a prior art example concerning an implant according to the invention. Common features for both an implant according to the invention and of its prior art example are their cylinder-like shape with a threaded surface and the presence of the areas intended for an in-growth of osseous and soft tissues.

Known is an implant (DE 19816865 A1, 1999) comprising a coating from bio-active silicate glass in the area of a gingiva contact. The gingiva epithelial cells could provide a reliable fixation of said implant into the jaws due to their fusion into an implant coating. However, an implant structure in this case only facilitates an in-growth of the tissues but it would neither promote said in-growth nor would it prevent a probable invasion of infection into an implantation area. Common features for both an implant of according to the invention and of its prior art example are the use of the coating intended for an in-growth of osseous and soft tissues and a cylinder-like shape of said implant.

Known is a cylinder-shaped implant with a threaded surface (WO 9722308 A1) having the cavities for the introduction of a bio-active composition during surgical operation.

A peculiar feature of the implant in question makes in possible to administer medications into an implantation area, however, a continuous post-operating administering of medications is a problem, since the canals are not through ones.

It is the aim of the present invention to provide a dental implant having a structure which makes it possible to provide a reliable fixation of said implant in osseous tissue and alveolus due to a more complete fusion of said osseous tissue with a porous inner implant area and an in-growth of soft tissues into a surface porous three-dimensional polymer implant area as a result of administering medications during operating and post-operating periods.

The above aim is achieved by the following means.

Filed is a cylinder-shaped dental implant having a titanium-made base and comprising a cavity for a porous structure and a canal for administering medications, while said implant base is made in the form of an outer thread-shaped helix fixed on three longitudinal stiffening ribs positioned inside said helix.

A porous structure having a pore size from 150 to 300 µm is positioned inside said thread-shaped helix.

The distal end portions of said longitudinal ribs are provided with a rigidly secured cylinder-shaped head having an axial bore, while in a bottom portion of said head there is made a thread having a shape and a pitch similar to a shape and a pitch of an outer thread-shaped helix, and an outer upper portion of said head is provided with an outer ring-shaped head in the form of a surface porous three-dimensional polymer structure from polytetrafluorethylene (PTFE).

At an upper portion of a cylinder-shaped head there is positioned a cone-shaped pin for making a tooth body, while said pin is provided with a stem having a longitudinal through canal which is fixed in an implant axial bore and is used to administer medications during operating and post-operating periods.

The basic requirements imposed to the implantation of dental structures are bio-compatibility of the materials in use and a reliable fixation of an implant in alveolus which is achieved both by the structural features (i.e. the use of threads, grooves, recesses, complex shapes) and by the kinds of materials in use (i.e. bio-compatible titanium alloys, titanium powders) and the combinations thereof. Of no less importance is a reliable contact of soft (gingiva) tissues with an implant surface and the possibility of administering medications either during surgical activities associated with implantation or during a restoration period of healing.

An implant structure according to the invention makes it possible to achieve the correspondence to the above-described requirements imposed to dental implants.

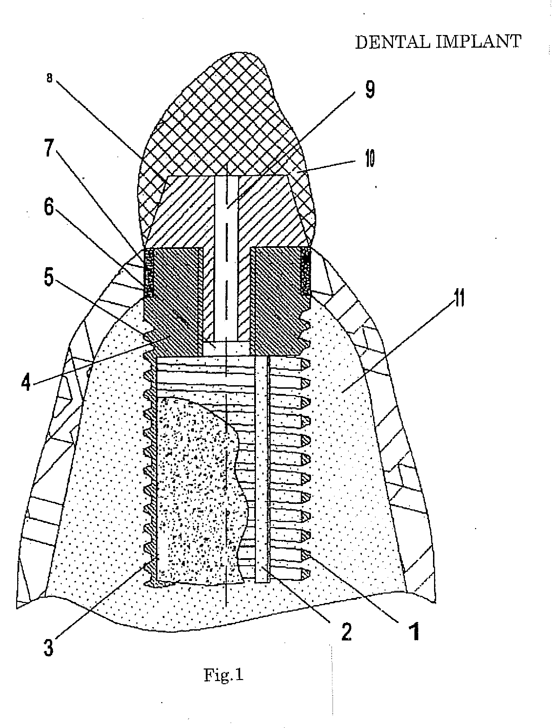

Figure 1 illustrates a general view of a dental implant according to the invention.

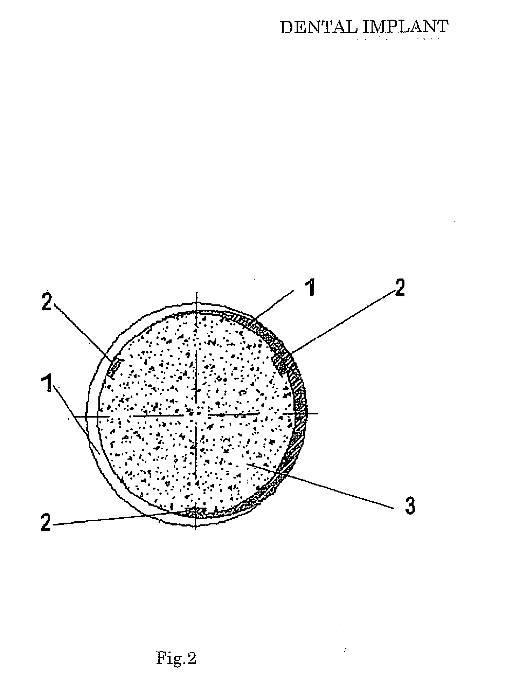

Figure 2 illustrates a cross-sectional view of a porous structure area.

A dental implant according to the invention is comprised of a base 1 made in the form of a thread-shaped helix having longitudinal stiffening ribs 2 with said helix fixed thereon, a porous structure 3, a cylinder-shaped head 4 secured at the distal end portions of said longitudinal stiffening ribs 2 and having a thread with a shape and a pitch similar to a shape and a pitch of said helix 1.. An axial implant bore 6 is intended for administering medications during operating and post-operating periods. An outer ring-shaped head 7 is made in the form of a surface porous three-dimensional polymer structure from PTFE. A cone-shaped pin 8 having a through longitudinal canal 9 and positioned at an upper portion of a cylinder-shaped head 4 serves for making a tooth body 10 on a bone 11.

The application of an implant is performed in the following way.

Example. An implant base 1 having an internal porous structure positioned within said base is screwed into a pre-formed bore of bone 11. The base 1 is screwed until the level of alveolus coincides with an outer ring-shaped head 7 from PTFE.

Further a longitudinal canal 9 of a cone-shaped pin 8 is used to administer medications to prevent any inflammatory complications both during operating and post-operating periods.

Osseous tissue is integrated into a porous structure 3 through the bores between the coils of a thread-like helix 1. A pore size in a spacious structure 3 ranges from 150 to 300 µm which provides an efficient recycling of a physiological fluid facilitating the supply of all the elements essential for an in-growth of osseous tissue. An outer ring-shaped head 7 from PTFE promotes an in-growth of soft tissues and prevents a probable invasion of infection into an implantation area. After an engraftment of an implant on a cone-shaped pin 8 is completed a tooth body 10 is made.

Thus, the technical achievement of the invention filed consists in creating the conditions for a successful in-growth of osseous and soft tissues into an implant due to decreasing the probability of complications during operating and post-operating periods which on the whole results in a reliable fixation of an implant.

## Claims

1. A cylinder-shaped dental implant with a titanium-made base comprising a cavity for a porous structure and a canal for administering medications, wherein said implant base is made in the form of an outer thread-shaped helix which is fixed on three longitudinal stiffening ribs positioned inside said helix and a porous structure having a pore size ranging from 150 to 300 µm is positioned inside said helix.

2. A dental implant as in claim 1, wherein the distal end portions of said longitudinal ribs are provided with a rigidly secured cylinder-shaped head having an axial bore, while in a bottom portion of said head there is made a thread having a shape and a pitch similar to a shape and a pitch of an outer thread-shaped helix, and an outer upper portion of said head is provided with an outer ring-shaped head in the form of a surface porous three-dimensional polymer structure from polytetrafluorethylene.

3. A dental implant as in claim 2, wherein at an upper portion of a cylinder-shaped head there is positioned a cone-shaped pin for making a tooth body, while said pin is provided with a stem having a longitudinal through canal which is fixed in an implant axial bore and is used to administer medications during operating and post-operating periods.
